# EUROPÄISCHE PATENTANMELDUNG

(11) **EP 2 031 035 A1**
(43) Veröffentlichungstag der Anmeldung: **04.03.2009**
(21) Anmeldenummer: 08013826.6
(22) Anmeldetag: 01.08.2008
(51) Int. Cl.: C09K 8/52, C08G 73/02

(54) **Verwendung von substituierten Polyethyleniminen als Gashydratinhibitoren mit verbesserter biologischer Abbaubarkeit**

(30) Priorität: 06.08.2007 DE 102007037015
(71) Anmelder: Clariant International Ltd., 4132 Muttenz (CH)
(72) Erfinder: Leinweber, Dirk, 65779 Kelkheim (DE); Rösch, Alexander, 67578 Gimbsheim (DE); Feustel, Michael, 55278 Köngernheim (DE)
(74) Vertreter: Mikulecky, Klaus

(57) **Zusammenfassung**

Gegenstand der Erfindung ist die Verwendung von substituierten Polyethyleniminen enthaltend Strukturelemente der Formel (1), 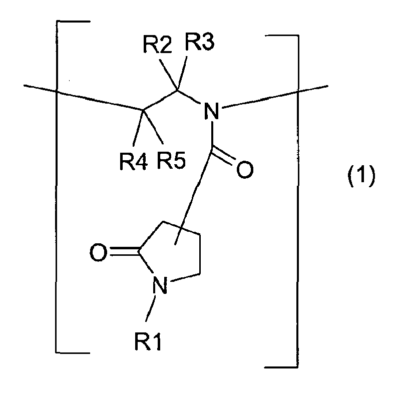 wobei
R1
H, C₁-C₃₀-Alkyl, C₁-C₃₀-Alkenyl oder C₇-C₃₀-Alkylaryl
R2, R3, R4 und R5
unabhängig voneinander H oder C₁-C₆-Alkyl
bedeuten,
in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

## Beschreibung

Die vorliegende Erfindung betrifft die Verwendung von substituierten Polyethyleniminen als Gashydratinhibitoren sowie ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der substituierte Polyethylenimine als Gashydratinhibitoren enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25 °C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.
Außerdem kann die Gashydratbildung auch beim Bohrvorgang zur Erschließung neuer Gas- oder Erdöllagerstätten bei entsprechenden Druck- und Terriperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederen Alkoholen, wie Methanol, Glykol, oder Diethylenglykol unterdrückt werden. Der Zusatz dieser Additive bewirkt, dass die thermodynamische Grenze der Gashydratbildung zu niedrigeren Temperaturen und höheren Drücken hin verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Antiagglomerants). Die dabei eingesetzten Inhibitoren behindern entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Antiagglomerants darstellen. Von besonderer Bedeutung sind hierbei Polymere mit Kohlenstoff-Backbone, die in den Seitengruppen sowohl cyclische (Pyrrolidon- oder Caprolactamreste) als auch acyclische Amidstrukturen enthalten.

So wird in WO-94/12761 ein Verfahren zur kinetischen Inhibierung der Gashydratbildung durch die Verwendung von Polyvinyllactamen mit einem Molekulargewicht von M_{W} > 40.000 D, und in WO-93/25798 wird ein solches Verfahren unter Verwendung von Polymeren und/oder Copolymeren des Vinylpyrrolidons mit einem Molekulargewicht von M_{W} > 5.000 bis 40.000 D offenbart.

EP-A-0 896 123 offenbart Gashydratinhibitoren, die Copolymere aus alkoxylierter Methacrylsäure ohne Alkyl-Endverschluss und cyclischen N-Vinylverbindungen enthalten können.

In US-5 244 878 wird ein Verfahren zum Verzögern der Bildung oder Vermindern der Bildungstendenz von Gashydraten beschrieben. Hierzu werden Polyole verwendet, die mit Fettsäuren oder Alkenylbernsteinsäureanhydriden verestert werden. Die hergestellten Verbindungen weisen keine Aminosäurefunktionen auf, die mit Clathraten (Käfigmolekülen) interagieren könnten.

Biologisch abbaubare Pyroglutaminsäureester werden in DE-10 2005 054 037 beschrieben, wobei die erfindungsgemäßen Verbindungen durch Umsetzung von Polyolen mit Pyroglutamin- oder Glutaminsäure hergestellt werden.

In WO-1990/13544 werden polymerisierbare Pyrrolidonyl 4,5-unsubstituierter Oxazol Monomere sowie deren Homo- und Copolymere beschrieben, die exzellente hydrotrope Eigenschaften besitzen. Eine Verwendung dieser Polymere als Gashydratinhibitoren wird nicht offenbart.

Die beschriebenen Additive besitzen nur eingeschränkte Wirksamkeit als kinetische Gashydratinhibitoren und/oder Antiagglomerants, müssen mit Co-Additiven verwendet werden, oder sind nicht in ausreichender Menge oder nur zu hohen Preisen erhältlich.

Um Gashydratinhibitoren auch bei stärkerer Unterkühlung ("subcooling") als derzeit möglich, d. h. weiter innerhalb der Hydratregion einsetzen zu können, bedarf es einer weiteren Wirkungssteigerung im Vergleich zu den Hydratinhibitoren des Standes der Technik. Zusätzlich sind in Bezug auf ihre biologische Abbaubarkeit verbesserte Produkte erwünscht.

Aufgabe der vorliegenden Erfindung war es also, Additive zu finden, die sowohl die Bildung von Gashydraten verlangsamen (kinetische Inhibitoren) als auch Gashydratagglomerate klein und pumpbar halten (Antiagglomerants), um so ein breites Anwendungsspektrum mit hohem Wirkpotential zu gewährleisten. Des Weiteren sollten sie in der Lage sein, die derzeit verwendeten thermodynamischen Inhibitoren (Methanol und Glykole), die beträchtliche Sicherheitsprobleme und Logistikprobleme verursachen, zu ersetzen.

Da derzeit verwendete Inhibitoren wie Polyvinylpyrrolidon und Polyvinylcaprolactam nur eine mäßige biologische Abbaubarkeit aufweisen, sollten die erfindungsgemäßen Verbindungen zudem eine verbesserte biologische Abbaubarkeit aufweisen.

Wie nun überraschenderweise gefunden wurde, eignen sich substituierte Polyethylenimine als Gashydratinhibitoren. Diese Polymere können je nach Struktur sowohl die Keimbildung und das Wachstum von Gashydraten verzögern (kinetische Gashydratinhibitoren) als auch die Agglomeration von Gashydraten unterdrücken (Antiagglomerants). Zudem weisen die erfindungsgemäßen Verbindungen eine deutlich verbesserte biologische Abbaubarkeit auf.

Gegenstand der Erfindung ist daher die Verwendung von substituierten Polyethyleniminen, enthaltend Strukturelemente der Formel (1), 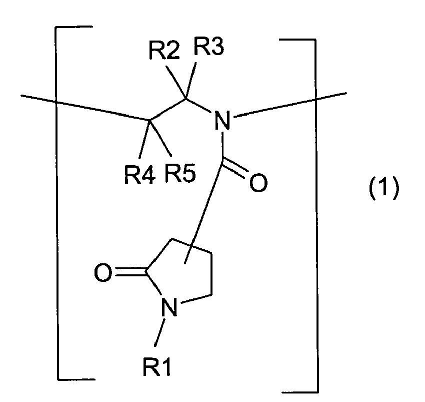 wobei
- R1: H, C₁-C₃₀-Alkyl, C₁-C₃₀-Alkenyl oder C₇-C₃₀-Alkylaryl
- R2, R3, R4, R5: unabhängig voneinander H oder C₁-C₆-Alkyl bedeuten,
in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

Die erfindungsgemäßen substituierten Polyethylenimine sind wie in WO1990/13544 beschrieben durch kationische Homo- oder Copolymerisierung von substituierten Oxazolen der Formel (2) darstellbar.

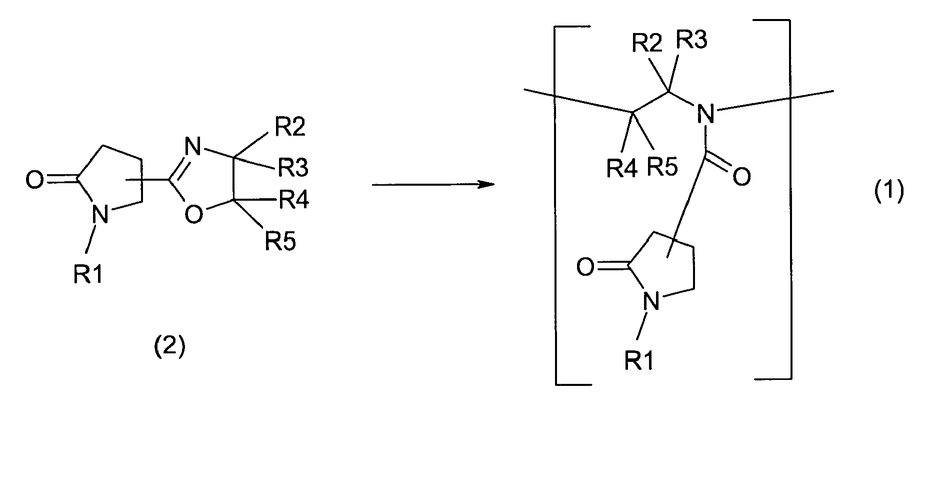

Das Molekulargewicht (M_{w}) der erfindungsgemäßen substituierten Polyethylenimine liegt zwischen 500 und 100000 g/mol, besonders bevorzugt zwischen 1000 und 20000 g/mol, speziell zwischen 2000 und 10000 g/mol.

Die erfindungsgemäßen substituierten Polyethylenimine können auch durch Copolymerisierung unterschiedlich substituierter Oxazole hergestellt werden, dann gilt allerdings die Maßgabe, dass mindestens 20 mol-% des Strukturelements der Formel (1) im substituierten Polyethylenimin enthalten sind.

Zur Copolymerisation mit den Verbindungen der Formel 2 sind vorzugsweise Oxazole der Formel 3 geeignet 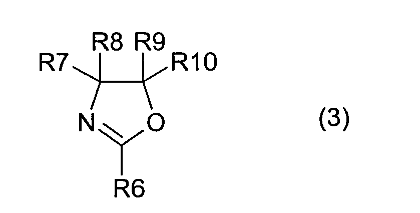 worin
- R6: H, C₁ bis C₃₀-Alkyl, C₂- bis C₃₀-Alkenyl, C₆-C₃₀-Aryl oder C₇ bis C₃₀-Alkylaryl
- R7, R8, R9, R10: unabhängig voneinander H oder C₁- bis C₆-Alkyl bedeuten.

Durch Copolymerisation mit den Verbindungen der Formel 2 ergeben die Verbindungen der Formel 3 im Copolymer Struktureinheiten der Formel 4

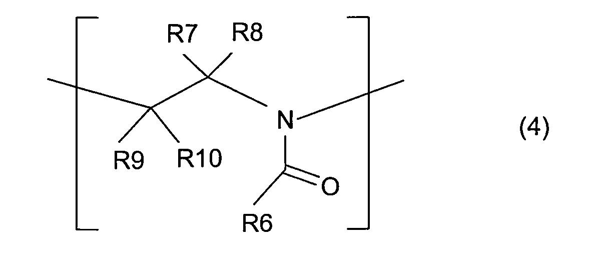

Im Copolymer sind vorzugsweise 20 bis 99, insbesondere 40 bis 95, speziell 60 bis 90 mol-% Struktureinheiten der Formel 1 und 1 bis 80, insbesondere 5 bis 60 und speziell 10 bis 40 mol-% Struktureinheiten der Formel 4 enthalten.

Beispielhaft sei hier die Copolymerisierung von 4-(4,5-Dihydro-oxazol-2-yl)-isobutyl-pyrrolidin-2-on (Formel (5) mit 2-Ethyl-4,5-dihydro-oxazol (Formel (6) aufgezeigt:

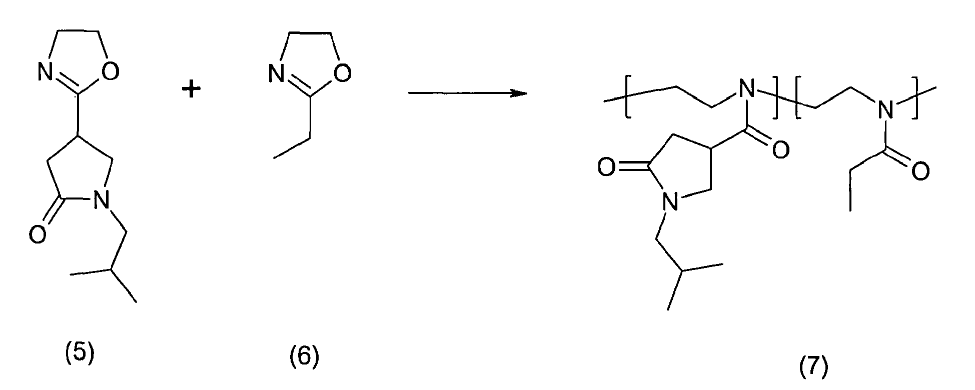

Die für die Herstellung der erfindungsgemäßen substituierten Polyethylenimine verwendeten substituierten Oxazole können durch Verfahren des Standes der Technik nach den Methoden A und B hergestellt werden:
- A: Umsetzung von Pyroglutaminsäure (Formel (8) mit R1 = H) mit einem 2-Aminoethanol der Formel (9) 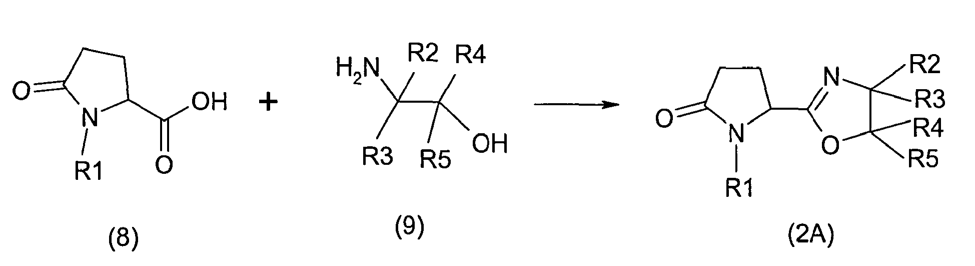
- B: Umsetzung von N-Alkyl-5-oxo-pyrrolidin-3-carbonsäure der Formel (10) mit einem 2-Aminoethanol der Formel (9) 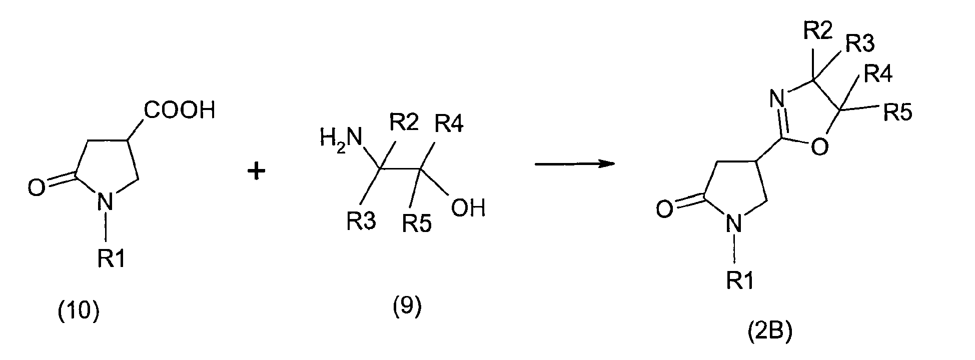
wobei R2, R3, R4, R5 für Wasserstoff oder einen aliphatischen organischen Rest mit 1 bis 6, bevorzugt 1 bis 2 Kohlenstoffatomen stehen. Besonders bevorzugte Alkohole der Formel (11) sind Aminoethanol, 2-Amino-1-propanol, 2-Amino-1-butanol sowie 2-Amino-2-methyl-1-propanol.

Ein weiterer Gegenstand der Erfindung ist ein Verfahren zur Inhibierung der Bildung von Gashydraten, indem einer mit einer gasförmigen, flüssigen oder festen organischen Phase in Verbindung stehenden wässrigen Phase, in der die Gashydratbildung verhindert werden soll, substituierte Polyethylenimine in Mengen von 0,01 bis 2 Gew.-% zusetzt.
Die Herstellung der erfindungsgemäßen Oxazole erfolgt durch unkatalysierte oder Übergangsmetall-katalysierte Kondensation der Pyroglutaminsäure (Formel (8) mit R1 = H) oder N-Alkyl-5-oxo-pyrrolidin-3-carbonsäure der Formel (10) mit dem Aminoalkohol der Formel (11). Die Reaktionstemperatur liegt im Allgemeinen zwischen 100 und 300 °C, vorzugsweise bei 140 bis 220 °C.

Die Reaktion kann bei Atmosphärendruck oder vermindertem Druck durchgeführt werden. Als homogene Katalysatoren für die Ringschlußreaktion sind tetravalente Titan- und Zirkonkatalysatoren zu nennen, die in Mengen von 0,1 bis 5 Gew.-%, bezogen auf das Gewicht des Reaktionsgemisches, verwendet werden (M. Beck et al., Die Angewandte Makromolekulare Chemie 223 (1994), 217-233). Die Veresterung nimmt im Allgemeinen 3 bis 30 Stunden in Anspruch.

Das bei der Oxazolsynthese zur Anwendung kommende molare Verhältnis von Aminoalkohol zur Carbonsäure liegt vorzugsweise zwischen 1 : 1 und 2 : 1, insbesondere zwischen 1,25 : 1 und 1,5 : 1.

Die substituierten Oxazole der Formel (2) werden durch Verwendung eines kationischen Initiators zu den erfindungsgemäßen substituierten Polyethyleniminen polymerisiert. Die kationische Polymerisierung kann durch ein Alkylhalogenid, eine Bor-Fluor-Verbindung, eine Antimon-Fluor-Verbindung, eine starke Säure oder deren Ester initiiert werden. Typische Polymerisierungsstarter sind Dimethylsulfat und p-Toluolsulfonsäuremethylester. Die Polymerisierung erfolgt in Lösung oder in Substanz bei einer Temperatur zwischen 70 und 170 °C.

Die erfindungsgemäßen substituierten Polyethylenimine können alleine oder in Kombination mit anderen bekannten Gashydratinhibitoren eingesetzt werden. Im Allgemeinen wird man dem zur Hydratbildung neigenden System soviel des erfindungsgemäßen substituierten Polyethylenimins zusetzen, dass man unter den gegebenen Druck- und Temperaturbedingungen eine ausreichende Inhibierung erhält. Die erfindungsgemäßen substituierten Polyethylenimine werden im Allgemeinen vorzugsweise in Mengen zwischen 0,02 bis 1 Gew.-% (bezogen auf das Gewicht der wässrigen Phase) verwendet. Werden die erfindungsgemäßen substituierten Polyethylenimine in Mischung mit anderen Gashydratinhibitoren verwendet, so beträgt die Konzentration der Mischung 0,01 bis 2 bzw. 0,02 bis 1 Gew.-% in der wässrigen Phase.

Die substituierten Polyethylenimine werden vorzugsweise zur Anwendung als Gashydratinhibitoren in Wasser oder in wassermischbaren (bevorzugt alkoholischen) Lösungsmitteln wie beispielsweise Methanol, Ethanol, Propanol, Butanol, Ethylenglykol, 1,2-Propylenglykol, 1,3-Propylenglykol, Glycerin, Diethylenglykol, Triethylenglykol, N-Methylpyrrolidon sowie oxethylierten Monoalkoholen, wie Butylglykol, Isobutylglykol, Butyldiglykol gelöst.

Öllösliche substituierte Polyethylenimine werden vorzugsweise zur Anwendung als Gashydratinhibitoren in unpolareren Lösungsmitteln wie C₃-C₈-Ketonen, beispielsweise Diisobutylketon, Methylisobutylketon, Cyclohexanon, oder C₅-C₁₂-Alkoholen, beispielsweise 2-Ethylhexanol, gelöst.

### Beispiele zur Monomersynthese

Allgemeine Vorschrift zur Herstellung der 5-(4,5-Dihydro-oxazol-2-yl)-pyrrolidin-2-one

In einem 500 ml Vierhalskolben mit Rührer, Thermometer, Stickstoffspülung sowie Rückflusskühler wurden 1 mol Pyroglutaminsäure, 1,25 mol Aminoethanol sowie 0,01 mol Titantetraorthobutylat vermischt und für 8 h bei 140 °C unter Rückfluss erhitzt. Nach Abkühlen und Ersetzen des Rückflusskühlers durch eine Destillationsbrücke wurden innerhalb von 6 h bei 140 °C ca. 30 ml Wasser abdestilliert. Anschließend werden unter vermindertem Druck bei einer Temperatur von 180°C überschüssiges Aminoethanol entfernt. Dabei wird 1 mol 5-(4,5-Dihydro-oxazol-2-yl)-pyrrolidin-2-on erhalten. Zur Umsatzkontrolle wurde nach Reaktionsende die Säurezahl bestimmt (Soll < 5 mg KOH/g).

### Beispiel 1

### Herstellung von 5-(4,5-Dihydro-oxazol-2-yl)-pyrrolidin-2-on

Es wurden nach der allgemeinen Vorschrift 129 g Pyroglutaminsäure mit 76,3 g Aminoethanol und 3,5 g Katalysator zur Reaktion gebracht und 154 g 5-(4,5-Dihydro oxazol-2-yl)-pyrrolidin-2-on erhalten.

### Beispiel 2

### Herstellung von 5-(4-Methyl-4,5-dihydro-oxazol-2-yl)-pyrrolidin-2-on

Es wurden nach der allgemeinen Vorschrift 129 g Pyroglutaminsäure mit 93,8 g 2-Amino-1-propanol und 3,5 g Katalysator zur Reaktion gebracht und 168 g 5-(4-Methyl-4,5-dihydro-oxazol-2-yl)-pyrrolidin-2-on erhalten.

### Beispiel 3

### Herstellung von 5-(4-Ethyl-4,5-dihydro-oxazol-2-yl)-pyrrolidin-2-on

Es wurden nach der allgemeinen Vorschrift 129 g Pyroglutaminsäure mit 111,4 g 2-Amino-1-butanol und 3,5 g Katalysator zur Reaktion gebracht und 177 g 5-(4-Ethyl-4,5-dihydro-oxazol-2-yl)-pyrrolidin-2-on erhalten.

### Beispiel 4

### Herstellung von 5-(4,4-Dimethyl-4,5-dihydro-oxazol-2-yl)-pyrrolidin-2-on

Es wurden nach der allgemeinen Vorschrift 129 g Pyroglutaminsäure mit 111,3 g 2-Amino-2-methyl-1-propanol und 3,5 g Katalysator zur Reaktion gebracht und 179 g 5-(4,4-Dimethyl-4,5-dihydro-oxazol-2-yl)-pyrrolidin-2-on erhalten.

### Allgemeine Vorschrift zur Herstellung der 4-(4,5-Dihydro-oxazol-2-yl)-1-alkylpyrrolidin-2-one

In einem 500 ml Vierhalskolben mit Rührer, Thermometer, Stickstoffspülung sowie Destillationsbrücke wurden 1 mol Itaconsäure, 1 mol primäres Amin sowie 0,01 mol Titantetraorthobutylat vermischt und innerhalb von 8 h bei 120 °C das Reaktionswasser abdestilliert. Es wurden 1,25 mol Aminoethanol zugesetzt und innerhalb von 4 Stunden der Großteil des Reaktionswasser entfernt, anschließend innerhalb von 4 h unter vermindertem Druck bei einer Temperatur von 180 °C überschüssiges Aminoethanol sowie die Reste des Reaktionswassers entfernt. Dabei wird 1 mol 4-(4,5-Dihydro-oxazol-2-yl)-1-alkyl-pyrrolidin-2-on erhalten.

### Beispiel 5

### Herstellung von 4-(4,5-Dihydro-oxazol-2-yl)-1-methyl-pyrrolidin-2-on

Es wurde nach der allgemeinen Vorschrift verfahren und 130 g Itaconsäure mit 160 g Methylamin (40% in Wasser) und 3,5 g Katalysator zur Reaktion gebracht und Reaktionswasser abdestilliert. Anschließend wurden 76,3 g Monoethanolamin zugegeben und 156 g 4-(4,5-Dihydro-oxazol-2-yl)-1-methyl-pyrrolidin-2-on erhalten.

### Beispiel 6

### Herstellung von 4-(4,5-Dihydro-oxazol-2-yl)-1-ethyl-pyrrolidin-2-on

Es wurde nach der allgemeinen Vorschrift verfahren und 130 g Itaconsäure mit 64,4 g Ethylamin (70% in Wasser) und 3,5 g Katalysator zur Reaktion gebracht und Reaktionswasser abdestilliert. Anschließend wurden 76,3 g Monoethanolamin zugegeben und 170 g 4-(4,5-Dihydro-oxazol-2-yl)-1-ethyl-pyrrolidin-2-on erhalten.

### Beispiel 7

### Herstellung von 4-(4,5-Dihydro-oxazol-2-yl)-1-propyl-pyrrolidin-2-on

Es wurde nach der allgemeinen Vorschrift verfahren und 130 g Itaconsäure mit 59,1 g Propylamin und 3,5 g Katalysator zur Reaktion gebracht und Reaktionswasser abdestilliert. Anschließend wurden 76,3 g Monoethanolamin zugegeben und 184 g 4-(4,5-Dihydro-oxazol-2-yl)-1-propyl-pyrrolidin-2-on erhalten.

### Beispiel 8

### Herstellung von 4-(4,5-Dihydro-oxazol-2-yl)-1-butyl-pyrrolidin-2-on

Es wurde nach der allgemeinen Vorschrift verfahren und 130 g Itaconsäure mit 73,2 g Butylamin und 3,5 g Katalysator zur Reaktion gebracht und Reaktionswasser abdestilliert. Anschließend wurden 76,3 g Monoethanolamin zugegeben und 198 g 4-(4,5-Dihydro-oxazol-2-yl)-1-butyl-pyrrolidin-2-on erhalten.

### Beispiel 9

### Herstellung von 4-(4,5-Dihydro-oxazol-2-yl)-1-sec-butyl-pyrrolidin-2-on

Es wurde nach der allgemeinen Vorschrift verfahren und 130 g Itaconsäure mit 73,2 g 2-Amino-butan und 3,5 g Katalysator zur Reaktion gebracht und Reaktionswasser abdestilliert. Anschließend wurden 76,3 g Monoethanolamin zugegeben und 198 g 4-(4,5-Dihydro-oxazol-2-yl)-1-*sec*-butyl-pyrrolidin-2-on erhalten.

### Beispiel 10

### Herstellung von 4-(4-Ethyl-4,5-dihydro-oxazol-2-yl)-isobutyl-pyrrolidin-2-on

Es wurde nach der allgemeinen Vorschrift verfahren und 130 g Itaconsäure mit 73,2 g Isobutylamin und 3,5 g Katalysator zur Reaktion gebracht und Reaktionswasser abdestilliert. Anschließend wurden 111,3 g 2-Amino-1-butanol zugegeben und 225 g 4-(4-Ethyl-4,5-dihydro-oxazol-2-yl)-isobutyl-pyrrolidin-2-on erhalten.

### Beispiel 11

### Herstellung von 4-(4,5-Dihydro-oxazol-2-yl)-1-octadec-9-enyl-pyrrolidin-2-on

Es wurde nach der allgemeinen Vorschrift verfahren und 130 g Itaconsäure mit 267,3 g Octadec-9-enylamin und 3,5 g Katalysator zur Reaktion gebracht und Reaktionswasser abdestilliert. Anschließend wurden 76,3 g Aminoethanol zugegeben und 406 g 4-(4,5-Dihydro-oxazol-2-yl)-1-octadec-9-enyl-pyrrolidin-2-on erhalten.

### Beispiel 12

### Herstellung von 4-(4-Ethyl-4,5-dihydro-oxazol-2-yl)-1-octadec-9-enyl-pyrrolidin-2-on

Es wurde nach der allgemeinen Vorschrift verfahren und 130 g Itaconsäure mit 267,3 g Octadec-9-enylamin und 3,5 g Katalysator zur Reaktion gebracht und Reaktionswasser abdestilliert. Anschließend wurden 111,3 g 2-Amino-1-butanol zugegeben und 434 g 4-(4-Ethyl-4,5-dihydro-oxazol-2-yl)-1-octadec-9-enyl-pyrrolidin-2-on erhalten.

### Beispiel 13

### Herstellung von 4-(4,5-Dihydro-oxazol-2-yl)-1-octyl-pyrrolidin-2-on

Es wurde nach der allgemeinen Vorschrift verfahren und 130 g Itaconsäure mit 129,2 g Octylamin und 3,5 g Katalysator zur Reaktion gebracht und Reaktionswasser abdestilliert. Anschließend wurden 76,3 g Aminoethanol zugegeben und 297 g 4-(4,5-Dihydro-oxazol-2-yl)-1-octyl-pyrrolidin-2-on erhalten.

### Allgemeine Vorschrift zur Darstellung der substituierten Polyethylenimine

In einem 500 ml Vierhalskolben mit Rührer, Thermometer, Stickstoffspülung sowie Rückflusskühler wurden 200 g Oxazol mit 400 g N-Methylpyrrolidon vorgelegt und 0,01 mol-% p-Toluolsulfonsäuremethylester zugegeben. Die Reaktionsmischung wird für 20 h bei 100 °C und 8 h bei 130 °C gerührt.

### Beispiel 14

5-(4,5-Dihydro-oxazol-2-yl)-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5500 g/mol.

### Beispiel 15

5-(4-Methyl-4,5-dihydro-oxazol-2-yl)-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 3400 g/mol.

### Beispiel 16

5-(4-Ethyl-4,5-dihydro-oxazol-2-yl)-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 2700 g/mol.

### Beispiel 17

5-(4,4-Dimethyl-4,5-dihydro-oxazol-2-yl)-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 3100 g/mol.

### Beispiel 18

4-(4,5-Dihydro-oxazol-2-yl)-1-methyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5900 g/mol.

### Beispiel 19

4-(4,5-Dihydro-oxazol-2-yl)-1-ethyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5500 g/mol.

### Beispiel 20

4-(4,5-Dihydro-oxazol-2-yl)-1-propyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5300 g/mol.

### Beispiel 21

4-(4,5-Dihydro-oxazol-2-yl)-1-butyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 4800 g/mol.

### Beispiel 22

4-(4,5-Dihydro-oxazol-2-yl)-1-sec-butyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5100 g/mol.

### Beispiel 23

4-(4,5-Dihydro-oxazol-2-yl)-isobutyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 6200 g/mol.

### Beispiel 24

4-(4,5-Dihydro-oxazol-2-yl)-1-octadec-9-enyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5800 g/mol.

### Beispiel 25

4-(4-Ethyl-4,5-dihydro-oxazol-2-yl)-1-octadec-9-enyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 2900 g/mol.

### Beispiel 26

Eine 1:1 molare Mischung von 4-(4,5-Dihydro-oxazol-2-yl)-1-methyl-pyrrolidin-2-on und 4-(4,5-Dihydro-oxazol-2-yl)-isobutyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 5300 g/mol.

### Beispiel 27

4-(4,5-Dihydro-oxazol-2-yl)-1-octyl-pyrrolidin-2-on wurde nach der allgemeinen Vorschrift polymerisiert. Mittel IR-Spektroskopie konnte kein Oxazol mehr nachgewiesen werden, das Molgewicht des Polymers betrug M_{w} = 4200 g/mol.

### Wirksamkeit der substituierten Polyethylenimine als Gashydratinhibitoren

Zur Untersuchung der inhibierenden Wirkung der substituierten Polyethylenimine wurde ein Stahlrührautoklav mit Temperatursteuerung, Druck- und Drehmomentaufnehmer mit 450 ml Innenvolumen benutzt. Für Untersuchungen zur kinetischen Inhibierung wurde der Autoklav mit destillierten Wasser und Gas im Volumenverhältnis 20:80 gefüllt, für Untersuchungen der Agglomeratinhibierung wurde zusätzlich Kondensat zugegeben. Anschließend wurden 50 bar Erdgas aufgedrückt.

Ausgehend von einer Anfangstemperatur von 20 °C wurde innerhalb 3 h auf 4 °C abgekühlt, dann 18 h bei 4 °C gerührt und innerhalb von 2 h wieder auf 20 °C aufgeheizt. Dabei wird zunächst eine Druckabnahme gemäß der thermischen Kompression des Gases beobachtet. Tritt während der Unterkühlzeit die Bildung von Gashydratkeimen auf, so verringert sich der gemessene Druck, wobei ein Anstieg des gemessenen Drehmoments und ein leichter Anstieg der Temperatur zu beobachten ist. Weiteres Wachstum und zunehmende Agglomeration der Hydratkeime führt ohne Inhibitor schnell zu einem weiteren Anstieg des Drehmomentes. Beim Aufwärmen des Gemisches zerfallen die Gashydrate, so dass man den Anfangszustand der Versuchsreihe erreicht.

Als Maß für die inhibierende Wirkung des Polymers wird die Zeit vom Erreichen der Minimaltemperatur von 4 °C bis zur ersten Gasaufnahme (T_{ind}) bzw. die Zeit bis zum Anstieg des Drehmomentes (T_{agg}) benutzt. Lange Induktionszeiten bzw. Agglomerationszeiten weisen auf eine Wirkung als kinetischer Inhibitor hin. Das im Autoklaven gemessene Drehmoment dient dagegen als Größe für die Agglomeration der Hydratkristalle. Bei einem guten Antiagglomerant ist das Drehmoment, das sich nach Bildung von Gashydraten aufbaut, gegenüber dem Blindwert deutlich verringert. Im Idealfall bilden sich schneeartige, fein-verteilte Hydratkristalle in der Kondensatphase, die sich nicht zusammenlagern und somit nicht zum Verstopfen der zum Gastransport und zur Gasförderung dienenden Installationen führen.

### Testergebnisse

Zusammensetzung des verwendeten Erdgases:
Methan 84,8 %, Ethan 9,2 %, Propan 2,6 %, Butan 0,9 %, Kohlendioxid 1,6 %, Stickstoff 0,9 %.

Als Vergleichssubstanz wurde ein kommerziell erhältlicher Gashydratinhibitor auf Basis Polyvinylpyrrolidon verwendet. Die Dosierrate betrug bei allen Versuchen 5000 ppm bezogen auf die Wasserphase.

| substituierte Polyethylenimine aus Beispiel | T_{ind} (h) | T_{agg} (h) |
|---|---|---|
| Blindwert | 0 | 0 |
| 14 | 15,0 | 15,5 |
| 15 | 15,6 | 15,8 |
| 16 | 17,1 | 17,2 |
| 17 | 18,0 | 18,4 |
| 18 | 17,9 | 18,3 |
| 19 | 19,5 | 19,9 |
| 20 | 20,7 | 21,4 |
| 21 | 22,5 | 23,2 |
| 22 | 24,1 | 24,7 |
| 23 | 25,0 | 25,8 |
| 26 | 21,5 | 22,0 |
| Vergleich | 3,5 | 3,6 |

Wie aus den obigen Testresultaten zu erkennen ist, wirken die erfindungsgemäßen substituierten Polyethylenimine als kinetische Gashydratinhibitoren und zeigen eine deutliche Verbesserung gegenüber dem Stand der Technik.

Um die Wirkung als Agglomeratinhibitoren zu prüfen, wurde im oben verwendeten Testautoklaven Wasser und Testbenzin vorgelegt (20 % des Volumens im Verhältnis 1:2) und bezogen auf die Wasserphase 5000 ppm des jeweiligen Additivs zugegeben.
Bei einem Autoklavendruck von 50 bar und einer Rührgeschwindigkeit von 500 U/min wurde die Temperatur von anfangs 20 °C innerhalb 3 Stunden auf 4 °C abgekühlt, dann 18 Stunden bei 4 °C gerührt und wieder aufgewärmt. Dabei wurden die Agglomerationszeit bis zum Auftreten von Gashydrat-Agglomeraten und das dabei auftretende Drehmoment am Rührer gemessen, das ein Maß für die Agglomeration der Gashydrate ist.

Als Vergleichssubstanz wurde ein kommerziell erhältlicher Anti-Agglomerant (quartäres Ammoniumsalz) herangezogen.

| Substituierte Polyethylenimine aus Beispiel | T_{agg}(h) | Mₘₐₓ (Ncm) |
|---|---|---|
| Blindwert | 0,1 | 15,9 |
| 25 | 3,1 | 1,2 |
| 27 | 3,5 | 1,1 |
| Vergleich | 2,6 | 4,1 |

Wie aus diesen Beispielen zu ersehen ist, sind die gemessenen Drehmomente im Vergleich zum Blindwert trotz Gashydratbildung stark reduziert. Dies spricht für eine deutliche agglomerat-inhibierende Wirkung der erfindungsgemäßen Produkte. Zusätzlich weisen die Produkte unter den Versuchsbedingungen auch eine deutliche Wirkung als kinetische Inhibitoren auf. Sämtliche Beispiele zeigen eine deutlich bessere Performance als der kommerziell erhältliche Anti-Agglomerant (Vergleich = Stand der Technik).

Im Folgenden wird die deutlich verbesserte biologische Abbaubarkeit (nach OECD 306) einiger ausgewählter erfindungsgemäßer Verbindungen im Vergleich zum Stand der Technik (kommerziell erhältliches Polyvinylpyrrolidon) aufgezeigt.

| Substituierte Polyethylenimine aus Beispiel | Biologische Abbaubarkeit 28 Tage (OECD 306) |
|---|---|
| Polyvinylpyrrolidon | 5 |
| 14 | 72 |
| 19 | 68 |
| 20 | 65 |
| 21 | 65 |
| 22 | 55 |
| 23 | 63 |
| 24 | 30 |
| 26 | 70 |
| 27 | 42 |

## Patentansprüche

1. Verwendung von substituierten Polyethyleniminen enthaltend repetitive Struktureinheiten der Formel (1), 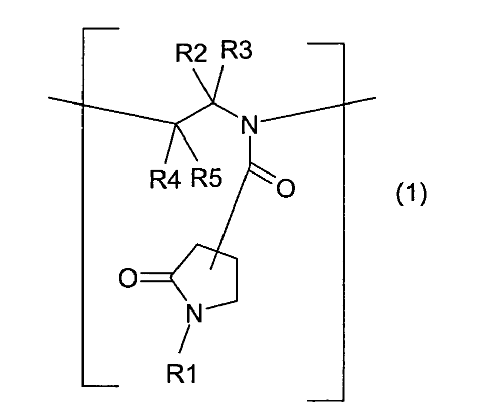 wobei
R1 H, C₁-C₃₀-Alkyl, C₁-C₃₀)-Alkenyl oder C₇-C₃₀-Alkylaryl
R2, R3, R4, R5 unabhängig voneinander H oder C₁-C₆-Alkyl bedeuten,
in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

2. Verwendung nach Anspruch 1, wobei das substituierte Polyethylenimin ein Homopolymer ist, das repetitive Struktureinheiten der Formel 1 enthält.

3. Verwendung nach Anspruch 1 und/oder 2, wobei das Molekulargewicht (M_{w}) der substituierten Polyethylenimine zwischen 500 und 100000 g/mol liegt.

4. Verwendung nach Anspruch 1 und/oder 3, wobei das substituierte Polyethylenimin ein Copolymer ist, das mindestens 20 mol-% repetitive Struktureinheiten der Formel (1) enthält.

5. Verwendung nach einem oder mehreren der Ansprüche 1, 3 und 4, worin das substituierte Polyethylenimin ein Copolymer ist, welches neben Struktureinheiten der Formel 1 solche der Formel 4 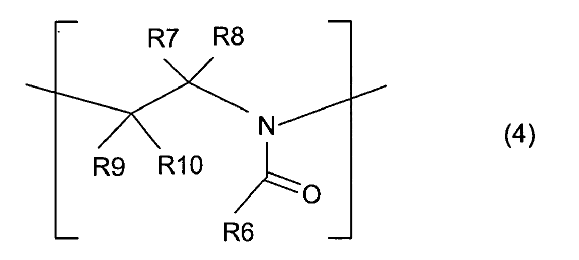 umfasst, worin
R6 H, C₁ bis C₃₀-Alkyl, C₂- bis C₃₀-Alkenyl, C₆-C₃₀-Aryl oder C₇ bis C₃₀-Alkylaryl
R7, R8, R9, R10 unabhängig voneinander H oder C₁- bis C₆-Alkyl bedeuten.

6. Verwendung nach Anspruch 5, wobei R6 für eine Ethylgruppe und R7, R8, R9, R10 für Wasserstoff stehen.

7. Verwendung nach einem oder mehreren der Ansprüche 1 und 3 bis 6, worin das substituierte Polyethylenimin 20 bis 99 mol-% Struktureinheiten der Formel 1 enthält.

8. Verwendung nach einem oder mehreren der Ansprüche 1 und 3 bis 7, worin das substituierte Polyethylenimin 1 bis 80 mol-% Struktureinheiten der Formel 4 enthält.
